## Europäisches Patentamt
## European Patent Office
## Office européen des brevets

(11) Publication number: **0 260 263 B1**

(12) **EUROPEAN PATENT SPECIFICATION**

(45) Date of publication of patent specification: **31.10.90**

(21) Application number: **86903637.6**

(22) Date of filing: **06.05.86**

(86) International application number:
**PCT/SE86/00211**

(87) International publication number:
**WO 86/06582 20.11.86 Gazette 86/25**

(51) Int. Cl.⁵: **A 01 K 1/10, A 01 K 1/00**

(54) **ANIMAL BOX.**

(30) Priority: **07.05.85 SE 8502230**

(43) Date of publication of application:
**23.03.88 Bulletin 88/12**

(45) Publication of the grant of the patent:
**31.10.90 Bulletin 90/44**

(84) Designated Contracting States:
**BE DE FR GB IT NL SE**

(56) References cited:
**US-A-2 198 048**
**US-A-3 127 871**
**US-A-3 473 515**
**US-A-3 792 686**

(73) Proprietor: **ALFA-LAVAL AGRI INTERNATIONAL AB**
**Farm Center P.O. Box 39**
**S-147 00 Tumba (SE)**

(72) Inventor: **LUNDIN, Sören**
**Lodjursvägen 9**
**S-195 00 Märsta (SE)**
Inventor: **TENGSTEDT, Axel**
**Läckövägen 28**
**S-121 50 Johanneshov (SE)**

(74) Representative: **Simpson, Ronald Duncan Innes et al**
**A.A. Thornton & Co. Northumberland House**
**303-306 High Holborn**
**London WCIV 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an animal box provided with two box walls which surround a restriction with a feeding device and a rear gate actuated by the animal.

When loose-housing herds are to be feeded in animal boxes provided with special feeding devices actuated by the presence of the animal it is especially important from the point of view of considering the health of the animal that the animal may eat undisturbed by other animals. One way of solving this problem is by providing the box with a rear gate or a door, which closes the entrance to the box behind the eating animal. This kind of gate may be closed mechanically or electrically. During the time when the animal eats no other animal can enter the box. When the animal has stopped eating it must move backwards in order to come out from the box, and the rearward movement opens the gate. When other animals see the gate open they sometimes try to enter the box at the same time as the animal which has just eaten is trying to get out. As a result conflicts arise which can result in injury to the animals involved. These problems are especially pronounced when feeding hogs.

In US-A-2198048 there is described a milking parlour in which stalls are provided for accommodating respective cows, each stall having opposed side walls, a front end wall mounting a feed container, a rear gate, and a yoke for holding the cow by the neck. A front end part of one side wall is hinged and constitutes an exit gate. In the open position of the exit gate the front end part takes a position inclined relative to the rear part of that side wall. The rear and exit gates are coupled to an actuating lever which is operated by the dairyman.

The invention aims to provide an animal box which solves the problems explained above. According to the invention there is provided an animal box comprising two box walls, a forward end restriction with a feeding device and a rear gate, one of the box walls being divided into two parts, and the front part, closest to the feeding device, being at an angle measured in the horizontal plane to the other part of said box wall, characterised in that the rear gate is actuable by the animal, the front part of said one wall is fixed in said angled position so that an additional space is formed in the front part of the box, and said additional space is partly confined by a front gate arranged to be actuated by the animal and to be opened outwardly from the box.

Animals which have eaten their ration in peace, may due to the fact that an additional space is created in the box, where a front gate is arranged, easily leave the box by moving forwards. If two smaller animals try to get access to the feeding device at the same time a box according to the invention is especially advantageous. The animal which is pushed away from the feeding device may easily move out from the box.

The front gate is with advantage arranged such that it comprises two gate parts arranged in such a way that they abut each other or a special stop in a closed position. Due to the fact that the gate consists of two parts an animal on its way out of the box cannot change its mind and move backwards, since the animal is then squeezed between the two gate parts. Neither is it possible for any animal which has succeeded in getting its nose between the gate parts to open the gate and enter the box from the wrong direction.

The parts of the gates are preferably spring loaded in order to admit only an opening movement out from the box. Of course other devices may be used to achieve this function.

If the front part of the box wall is arranged in an acute angle with an imaginary extension of the rear wall part, and the front gate is arranged between the feeding device and the front part of the box wall the additional space defined in the front part of the box there is a well defined exit for the animal, when it has finished eating. The animal moves backwards a few steps and may then leave the box in an obliquely forwards direction through the front gate.

The animal box is preferably provided with a means which is movable between two positions and is connected to the rear gate, which means in a manner known per se is forced away by an animal approaching the feeding device and is returned to its original position when the animal has finished eating and starts to move backwards from the feeding device, the means in its original position being substantially parallel to the front part of the box wall. In this way there is created in the front part of the box a space which is recognized by the animal as a exit passage out from the box.

Two animal boxes according to the invention may be arranged adjacent to each other in such a way that the undivided box wall is common to them both. The boxes will then have a mirror image arrangement so that the exit of each box situated at the side of that box remote from the other box.

It has been found that animals tend not to lay down in front of the front gates and block them when animal boxes embodying the invention are used.

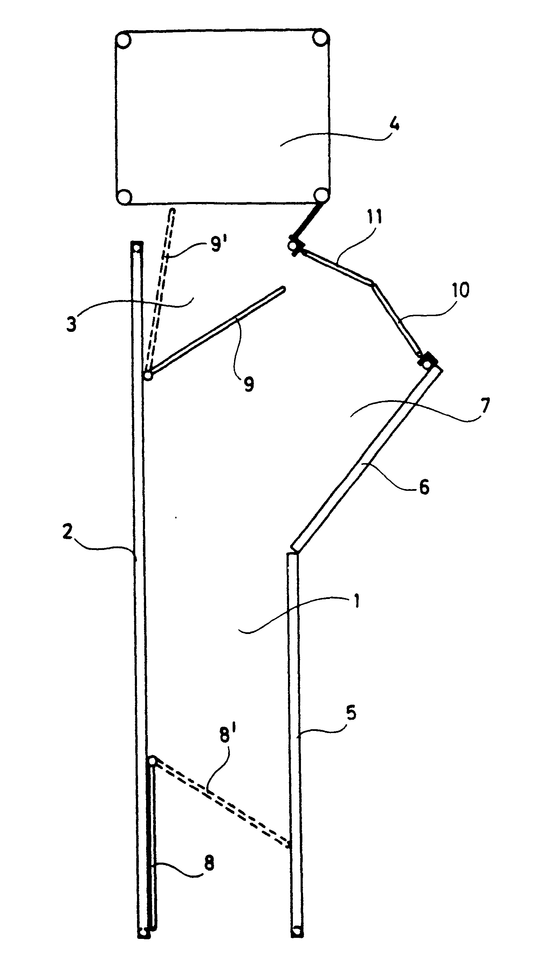

The invention is described further below with reference to the accompanying drawing which shows in plan an animal box embodying the invention.

In the drawing there is shown an animal box 1 designed for feeding hogs but the same form of box may of course be used for all kinds of animals which are loose housed. On one side the box is delimited by a box wall 2. At the front part 3 of the box there is a feeding device 4 which is not described further, which when the animal arrives at a feeding tray in a manner known per se gives the animal a certain amount of fodder. The box is also provided with a second wall 5, the front part 6 of which is arranged at an acute angle to an imaginary extension of the rear part of the wall 5, so that there is defined in the front part of the box an additional substantially triangular space 7. The box also has a rear gate 8 which is movable between open and closed positions. This rear gate 8 is connected by a draw bar (not shown) to a front means 9. When the animal enters the box and forces its way forwards towards the feeding device the means 9 is pushed forward to a position 9', and thereby the rear gate 8' is closed behind the animal. Between the front wall part 6 and the feeding device there are two gate parts 10, 11 which in a closed position abut each other. When the animal has eaten it moves backwards, and the means 9 returns to its original position. In this position the means 9 is directed obliquely forwards in relation to the feeding device and forms together with the box wall part 6 a lateral exit passage from the box through which the animal may leave the box through the gate 10, 11 in the front part 3 of the box. The spring loaded gate parts 10, 11 may only be opened in the direction out from the box, which means that no animal can enter the box this way. When the means 9 returns to its original position the gate 8 is opened and another animal may enter the box and move forward to the feeding device 4.

In this embodiment the additional space 7 in the box has the shape of a triangle but the space may of course, depending on the angles of the box wall, be shaped differently.

## Claims

1. An animal box (1) comprising two box walls (2, 5), a forward end restriction with a feeding device (4) and a rear gate (8), one of the box walls (5) being divided into two parts, and the front part (6), closest to the feeding device, being at an angle measured in the horizontal plane to the other part of said box wall, characterised in that the rear gate (8) is actuable by the animal, the front part (6) of said one wall (5) is fixed in said angled position so that an additional space (7) is formed in the front part of the box, and said additional space is partly confined by a front gate arranged to be actuated by the animal and to be opened outwardly from the box.

2. An animal box according to claim 1, wherein the front gate consists of two gate parts (10, 11) arranged in such a way that they abut each other or a stopping means in a close rest position.

3. An animal box according to claim 2, wherein the gate parts (10, 11) are spring loaded in order to allow only an opening movement of an animal out from the box.

4. An animal box according to claims 1, 2 or 3, wherein the front part (6) of the box wall (5) is arranged at an acute angle with an imaginary extension of the rear part of said wall, the front gate is arranged between the feeding device and the front part of said wall, for an animal when it has finished eating to leave the box in an obliquely forward direction.

5. An animal box according to any one of claims 1 to 4, wherein a means (9) movable between two positions is connected with the rear gate (8), said means being arranged to be forced away by an animal approaching the feeding device and to return to its original position when the animal has finished eating and moves backwards from the feeding device, and said means (9) in its original position lying substantially parallel to the front part (6) of said one box wall (5).

6. An animal box according to any one of claims 1 to 4, wherein one of the box walls (2) also forms a box wall of an adjacent animal box, the front gates and the adjacent boxes being in mirror image in relation to each other.

## Patentansprüche

1. Tierkäfig (1) mit zwei Käfigwänden (2, 5), einer Verengung mit einer Fütterungseinrichtung (4) am vorderen Ende und einem Gatter (8) am hinteren Ende, wobei eine der Käfigwände (5) zu zwei Teilen unterteilt ist und der der Fütterungseinrichtung nächstliegende vordere Teil (6) in der waagerechten Ebene gemessen winklig zum anderen Teil der Käfigwand liegt, dadurch gekennzeichnet, daß das hintenliegende Gatter (8) vom Tier betätigbar ist, daß der vordere Teil (6) der einen Wand (5) in der winkligen Lage so fixiert ist, daß im vorderen Käfigteil ein zusätzlicher Raum (7) gebildet wird, und daß der zusätzliche Raum teilweise von einem vorderen Gatter umschlossen ist, das so angeordnet ist, daß es vom Tier betätigt werden und auswärts geöffnet werden kann.

2. Tierkäfig nach Anspruch 1, bei dem das vordere Gatter aus zwei Gatterteilen (10, 11) besteht, die so angeordnet sind, daß sie in der geschlossenen Ruhelage aneinander oder an einer Anschlageinrichtung anliegen.

3. Tierkäfig nach Anspruch 2, bei dem die Gatterteile (10, 11) so federvorgespannt sind, daß ein Tier sie nur auswärts öffnen kann.

4. Tierkäfig nach Anspruch 1, 2 oder 3, bei dem der vordere Teil (6) der Käfigwand (5) spitzwinklig zu einer gedachten Verlängerung des hinteren Teils dieser Wand und das vordere Gatter zwischen der Fütterungseinrichtung und dem vorderen Teil der Wand angeordnet sind, damit ein Tier nach dem Fressen den Käfig schräg vorwärts verläßt.

5. Tierkäfig nach einem der Ansprüche 1 bis 4, bei der mit dem hinteren Gatter (8) eine zwischen zwei Stellungen bewegbare Einrichtung (9) verbunden und so angeordnet ist, daß sie von einem sich der Fütterungseinrichtung nähernden Tier aus dem Weg gedrückt werden kann und in ihre Ausgangslage zurückkehrt, nachdem das Tier zu Ende gefressen hat und von der Fütterungseinrichtung zurückweicht, wobei die Einrichtung (9) in ihrer Ausgangslage im wesentlichen parallel zum vorderen Teil (6) der einen Käfigwand (5) liegt.

6. Tierkäfig nach einem der Ansprüche 1 bis 4,

EP 0 260 263 B1

bei der eine (2) der Käfigwände auch eine Käfigwand eines angrenzenden Tierkäfigs bildet und die vorderen Gatter und die aneinandergrenzenden Käfige spiegelbildlich zueinander angeordnet sind.

**Revendications**

1. Cage pour animaux (1) comprenant deux parois (2, 5), une structure de retenue d'extrémité avant avec un dispositif d'alimentation et un portillon arrière (8), l'une (5) des parois de la cage étant divisée en deux parties, et la partie avant (6) qui est la plus proche du dispositif d'alimentation étant inclinée en formant un angle, mesuré dans le plan horizontal, avec l'autre partie de ladite paroi de la cage, caractérisée en ce que le portillon arrière (8) peut être actionné par l'animal, la partie avant (6) de ladite paroi (5) est maintenue dans ladite position inclinée de manière qu'un espace additionnel (7) soit formé dans la partie avant de la cage, et ledit espace additionnel est en partie limité par un portillon avant agencé pour être actionné par l'animal et pour être ouvert vers l'extérieur à partir de la cage.

2. Cage pour animaux selon la revendication 1, dans laquelle deux parties (10, 11) de portillon sont disposées de manière à venir buter l'une contre l'autre, ou contre une butée spéciale, en position fermée.

3. Cage pour animaux selon la revendication 2, dans laquelle les parties (10, 11) des portillons sont sollicitées par des ressorts qui ne permettent qu'un mouvement d'ouverture d'un animal qui sort de la cage.

4. Cage pour animaux selon les revendications 1, 2 ou 3, dans laquelle la partie avant (6) de la paroi (5) de la cage est disposée selon un angle aigu par rapport à un prolongement imaginaire de la partie arrière de ladite paroi, et le portillon avant est disposé entre le dispositif d'alimentation et la partie avant de ladite paroi de façon que l'animal qui a fini de manger quitte la cage dans une direction en oblique vers l'avant.

5. Cage pour animaux selon l'une quelconque des revendications 1 à 4, dans laquelle un moyen (9) mobile entre deux positions est relié au portillon arrière (8), lequel moyen est agencé pour être repoussé par un animal qui s'approche du dispositif d'alimentation, et revenir à sa position d'origine quand l'animal a fini de se nourrir et recule par rapport au dispositif d'alimentation, ledit moyen étant, dans sa position d'origine, sensiblement parallèle à la partie avant (6) de ladite paroi (5) de la cage.

6. Cage pour animaux selon l'une quelconque des revendications 1 à 4, dans laquelle l'une des parois (2) de la cage forme également la paroi d'une cage pour animal adjacente, les portillons frontaux et les cages adjacentes étant symétriques les uns par rapport aux autres.